# EUROPEAN PATENT APPLICATION

(11) **EP 0 817 486 A2**
(43) Date of publication of application: **07.01.1998**
(21) Application number: 97110403.9
(22) Date of filing: 25.06.1997
(51) Int. Cl.: H04N 7/173

(54) **Method for altering a broadcast transmission as a function of its recipient on a communications network**

(30) Priority: 27.06.1996 US 672123
(71) Applicant: AT&T Corp., New York, NY 10013-2412 (US)
(72) Inventor: Bruno, Richard Frank, Morristown, N.J. 07960 (US); Gibbon David Crawford, Lincroft, N.J. 07738 (US); Markowitz, Robert Edward, Glen Rock, N.J. 07452 (US); Simon, Steven David, Middletown, N.J. 07748 (US); Shahraray, Behzad, Freehold, N.J. 07728 (US); Perea, Carlos Alberto, Bethlehem, PA 18017 (US)
(74) Representative: KUHNEN, WACKER & PARTNER

(57) **Abstract**

Audiovisual programs are transmitted over a low-bandwidth network in a compressed form in which the number of video frames has been reduced by selecting "significant" frames. The user sees a series of still images accompanying an apparently full audio channel. If a particular frame is advertising, then the user is identified, and depending on the user's demographic or psychographic profile, an advertisement different from the one originally included in the program may be transmitted. Alternatively, if the user has paid not to receive advertising, the system may skip any advertising that it encounters. However, certain advertisements may be flagged in such a way that they cannot be omitted and that other advertisements cannot be transmitted in their places.

## Description

### Background of the Invention

This invention relates to the transmission over a communications network of stored broadcast transmissions, with alteration of the transmission as a function of its recipient. More particularly, this invention relates to a method of selectively altering advertising in such programs.

With the increasing popularity of on-line computer networks, such as the Internet, it has become increasingly common to transmit audiovisual programs, such as movies or television programs, over such networks. However, because of the limited bandwidth of such networks, and particularly the limitations of most users' connections to the network, it takes a long time to transmit a program with its full content. For example, at a connection speed of 28,800 bits per second, it could take up to about 45 minutes to transmit even a three- or four-minute audiovisual segment with sound and full-motion video.

Various compression techniques are used to attempt to reduce the amount of data to be transmitted in connection with audiovisual programs, but most such techniques have to date produced less than satisfactory results. The majority of the data is found in the video portion of the program, and thus efforts have focused there. In addition, it has been observed that users tend to be more forgiving of quality deficiencies caused by video compression than those caused by audio compression; users expect audio to be substantially perfect.

Some techniques for compressing the video portion attempt to reduce the amount of data sent for each frame, but that may result in a loss of sharpness or detail. Other techniques compare each frame to the previous frame and only transmit the changes from one frame to the next. Still other techniques drop certain frames completely, frequently based solely on a fixed interval -- i.e., every nth frame is dropped, regardless of its content and its relationship to adjacent frames. This last technique results in video having a "jerky" appearance.

More recently, a compression technique has been based on selecting video frames as a function of their content. In that technique, certain frames are extracted automatically based on their content and are retained, while the remaining frames are discarded. For example, scene changes, fade-outs, and volume changes in the associated audio channel could be used to indicate important frames. Those frames would be retained while others would be discarded. The only exception might be a program involving a lot of action, which would have many scene changes resulting in more "significant" frames than could be kept, so that even some of the "significant" frames might have to be discarded.

One type of scene change that is present in audiovisual programs derived from, e.g., broadcast (or even cable) television sources, is a scene change marking the transition from the program itself to an advertisement. Although one approach would be to count such scene changes among those to be discarded, the presence of commercial advertisements in the program might be the mechanism by which the network operator derives revenue, and obtains access to the program. Specifically, the network operator may have an arrangement with the broadcaster to retransmit the program over the network with the understanding that at least some of the advertising will be retained, with the network operator receiving at least some of the advertising revenue.

It is also known to replace or supplement portions of television broadcasts with segments that are personalized to particular viewers. Such a technique could be used by the network operator to replace the advertisements, originally broadcast as part of a television program, with other advertising segments, targeted to individual subscribers, from which the network operator might derive more revenue than from the generic advertising that was originally broadcast.

However, the agreement under which the network operator obtains the broadcast program may require that at least certain advertisements be retained. In addition, it may be desirable to retain certain public service advertisements.

It would be desirable to be able to provide a technique whereby a subscriber can view a compressed audiovisual program over a communications network, with some segments of the program automatically customized for the user in place of some original segments, but other of the original segments automatically retained as being significant.

### Summary of the Invention

It is an object of this invention to provide a technique whereby a subscriber can view a compressed audiovisual program over a communications network, with some segments of the program automatically customized for the user in place of some original segments, but other of the original segments automatically retained as being significant.

In accordance with this invention, there is provided a method of customizing transmissions on a communications network. The transmissions are transmissions of audiovisual programs containing segments directed to a general audience, and the method includes storing on the communications network the programs, containing the segments. Also stored on the communications network is at least one additional segment, as well as information regarding subscribers of the communications network. For each program, a table is maintained indicating (a) where in the program the segments are found and (b) which of the segments are available for substitution. On request by a subscriber for transmission of one of the programs, (a) information regarding that subscriber is examined and based on that examination at least one of the additional segments is selected, (b) the table associated with that program is examined to determine which of the segments is available for substitution, and (c) one of the additional segments is substituted in the program for one of the segments available for substitution. The program is transmitted to the subscriber with the additional segment.

### Brief Description of the Drawings

The above and other objects and advantages of the invention will be apparent upon consideration of the following detailed description, taken in conjunction with the accompanying drawings, in which like reference characters refer to like parts throughout, and in which:
FIG. 1 is a schematic diagram of a client/server network architecture with which the method according to the present invention may be used;
FIG. 2 is a representation of a media table used with the present invention;
FIG. 3 is a representation of a user screen interface of a preferred embodiment of viewing software implementing the present invention;
FIG. 4 is a flow diagram showing operation of the viewing software of FIG. 3; and
FIG. 5 is a flow diagram showing a preferred embodiment of the method of the present invention.

### Detailed Description of the Invention

The present invention can be used with any form of transmission medium that allows the transmitter to identify the recipient and to target a transmission to a particular recipient. For example, the invention could be used with a bidirectional cable television system. However, the invention preferably is implemented in connection with a viewer that allows a user to view programs that are compressed in the manner described above and broadcast across a low-bandwidth network to the recipient's computer. Such a viewer preferably streams the audio portion of a program substantially in real time to fill an audio buffer of a few seconds or more, and then preferably requests the video portion of the program content on a frame-by-frame basis, having previously downloaded a "media table" indicating which frames are available for downloading and how they relate in time to the audio portion. Because a particular user (or user's computer) is making the request, the identity of the user is known to the system. Therefore, in accordance with the present invention, when the requested frame is, e.g., an advertising frame, the system is able to remove or ignore the originally broadcast advertisement, and substitute in its place one which is targeted to the user -- e.g., by demographic or psychographic profile.

The substitution could occur when the user first requests the program. Specifically, before the media table for the program, which preferably is the first item sent to the user, is transmitted, all entries related to advertisements could be reviewed, and substitutions decided upon, and then the identification of the frames to be displayed to the user can be inserted into the table before it is even sent to the user. Corresponding changes would have to be made to the audio track, which is sent substantially in real time after the media table and before the corresponding images, so that the audio for the substituted advertisements is present, before any audio is sent. Alternatively, and preferably, the media table could simply indicate that an advertising frame should be sent, and at the time that the user's system reaches that table entry and requests the advertising, the server could look up the correct advertisement for that user and transmit both the audio and the video frame to be substituted. Either way, the server would first examine the original advertisement to determine whether or not it had been marked as an advertisement that should be allowed to remain in place. And for certain users, even if the original advertisement has not been marked as one that must remain, there may be no substitute advertisement, and so those users would receive the original advertisement even though some other users might receive different advertisements.

The audio portion to be transmitted preferably is the original audio, including the audio for the original advertisements. Therefore, in the preferred embodiment, whenever the server sends a substitute advertisement, it will also have to transmit substitute audio to be played while the advertisement video image is playing. The user software preferably would ignore any reference in the media table to the original audio that would have played while the substitute audio is playing.

As an alternative service -- e.g., one for which the user/subscriber pays a higher rate, the system, on reaching an advertisement, could skip over it altogether. Although this alternative also could be accomplished by sending such users a different media table, which has no entries for the advertisements, in the interest of economy the standard media table is preferably sent. When the user's viewer software reaches an advertisement, and requests the appropriate frame, and because the server knows that that viewer does not receive advertisements, the server will not send the advertising video image (this can be thought of as substituting a "null image" in place of the original image, so that this embodiment is a parallel to the substitute advertising embodiment), and further will skip over the portion of the audio track relating to the advertisement, and proceed directly to the audio associated with the next frame to be requested. This alternative embodiment could be designed so that the viewer receives no advertisements at all, or else certain advertisements, such as public service announcements, could be allowed to remain.

Although the invention has heretofore been described in the context of the substitution of advertisements, it can be used for other targeted transmissions. For example, particular viewers may pay to receive audio or closed captioning, or both, in a different language from the original language of the program, except that certain segments will not be substituted and will be transmitted in their original language because of their significance in the original language.

It should be understood that the term "audiovisual," as used herein, refers to a program that has a video component, and one or both of an audio component and a closed captioning component. Thus, there might be no audio in the audiovisual program.

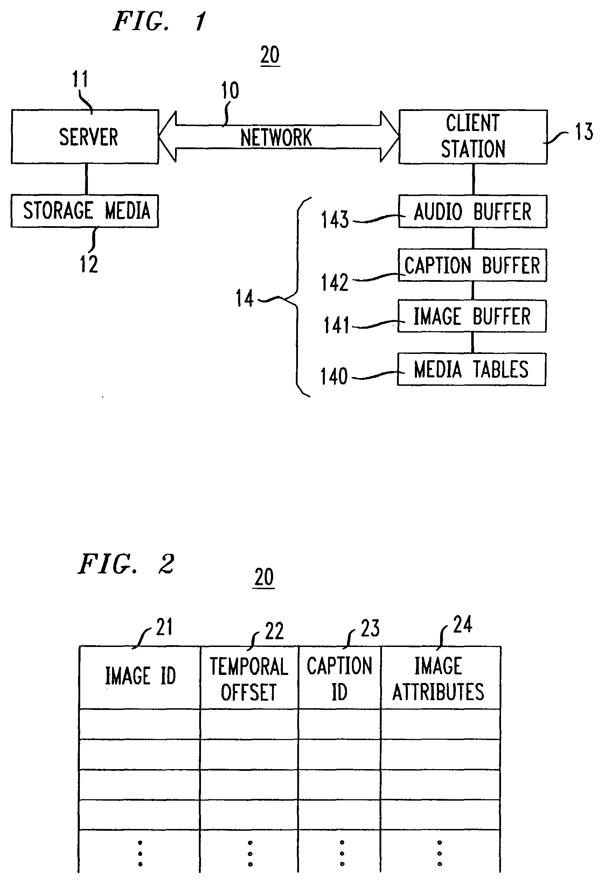

The invention will now be described with reference to FIGS. 1-5.

Methods according to the preferred embodiment of the present invention may be used in any environment in which an audiovisual program is transmitted from a source to a user station over a transmission medium having insufficient bandwidth to transmit the complete program (i.e., the program with all of its video frames present), even with compression, in real time. The invention may conveniently be described in the context of the architecture shown in FIG. 1, in which the audiovisual program is transmitted from a server 11, where the program is stored in storage media 12, over a low-bandwidth network 10 to a user's client station 13, which may be, for example, a personal computer.

As stated above, low-bandwidth network 10 could be any network having insufficient bandwidth to transmit an audiovisual program with all of its video frames, even with compression, in real time. While the bandwidth limitation could be inherent in the network itself, it is intended that the phrase "low- bandwidth network" encompass even networks such as the Internet, which rely on high-speed links, including fiber-optic links, that have high intrinsic bandwidth, but to which users are typically connected by connections that limit the effective speed or bandwidth. Even the best current telephone modems, for example, connect at speeds of at most 28,800 or 33,600 bits per second, which effectively make the Internet a low-bandwidth network for users of such modems.

The user's client station 13, when using software embodying the current invention, allocates in its working memory 14 a buffer 140 for holding the media tables referred to above, as well as buffers 141, 142, 143 for holding, respectively, the video, closed captioning and audio portions of a received program. The media table or tables stored in buffer 140 may have any suitable format. One sample format 20, shown in FIG. 2, has four "columns" 21, 22, 23, 24. Each entry in column 21 preferably contains the identifier of a particular video image. Each respective row thus preferably contains information regarding that particular image. Column 22, for example, preferably indicates the temporal offset for the image - i.e., the time, measured from the beginning of the program, at which the image is first displayed. This assures that the image is correctly correlated to the audio track, which preferably begins continuous playback at a temporal offset of zero. The image preferably will remain displayed until the temporal offset of the next image is reached, at which point that new image, assuming it is available (i.e., there was no network difficulty that prevented its retrieval), preferably will be displayed. If the new image is not available, then preferably the current image remains displayed until the new image can be retrieved, or until the temporal offset for still another image is reached. Alternatively, a blank screen or an error message, such as "VIDEO NOT AVAILABLE AT THIS TIME," may be displayed.

Column 23 preferably identifies the closed captioning data, if used, that should be displayed with a particular image. However, because a particular video frame may be associated with several frames of closed captioning data, a separate table may be used, ad column 23 could be omitted.

Column 24 preferably includes data regarding various image attributes. For example, as discussed above, an indication of the type of scene change that resulted in selection of the image might be included to enable the software implementing the invention to determine whether or not to load that frame in advance of certain other frames. In addition, when the image is an advertising image, that information could be stored in column 24, which could also be a pointer to an alternate advertisement.

Other data may be included in table 20, and certain of the data described may be omitted, according to the needs of the particular implementation of the invention, as would he apparent to those of ordinary skill.

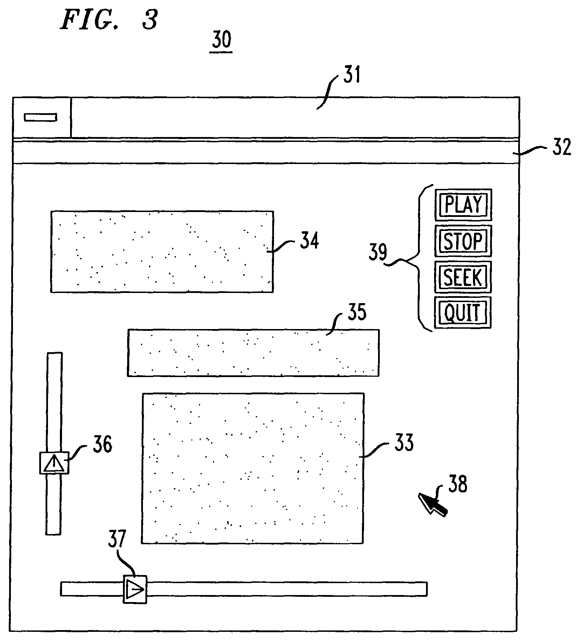

A preferred embodiment of a viewer interface 30 in accordance with the invention is shown in FIG. 3, although other viewer interface configurations may also be used. Interface 30 is preferably implemented using a standard graphical user interface such as Microsoft WINDOWS™, and thus has certain standard elements such as title bar 31 and menu bar 32. An image area 33 is provided for the display of the video images of the audiovisual program. Area 34 is provided for the display of the secondary images discussed above (e.g., advertising that is not part of the original broadcast). Area 35 is provided for the display of closed captioning data. While area 33 would probably, but not necessarily, have a visible boundary even when no image was being displayed there, areas 34 and 35 probably would not have visible boundaries.

Interface 30 also preferably has two slide controls 36, 37. Slide control 36 preferably controls the volume of the audio portion of the program when played back. Slide control 37 preferably allows the user to scroll to a different portion of the program. Slide control 37 thus preferably would move, on its own, as the program progressed, to indicate the current position in the program. Preferably, indicia (not shown) are displayed along the paths of slide controls 36, 37 to indicate their functions and their levels or positions. Slide controls 36, 37 are preferably actuated by the user using a mouse or similar pointing device that controls a displayed pointer 38. Buttons 39 may be provided for functions such as PLAY, STOP, SEEK and QUIT. Other functions may be available to the user using pointer 38, either through other graphical controls (not shown) in other areas of viewer 30, or through menu items on menu bar 32 (which may also have keystroke equivalents accessible from the keyboard of the user station).

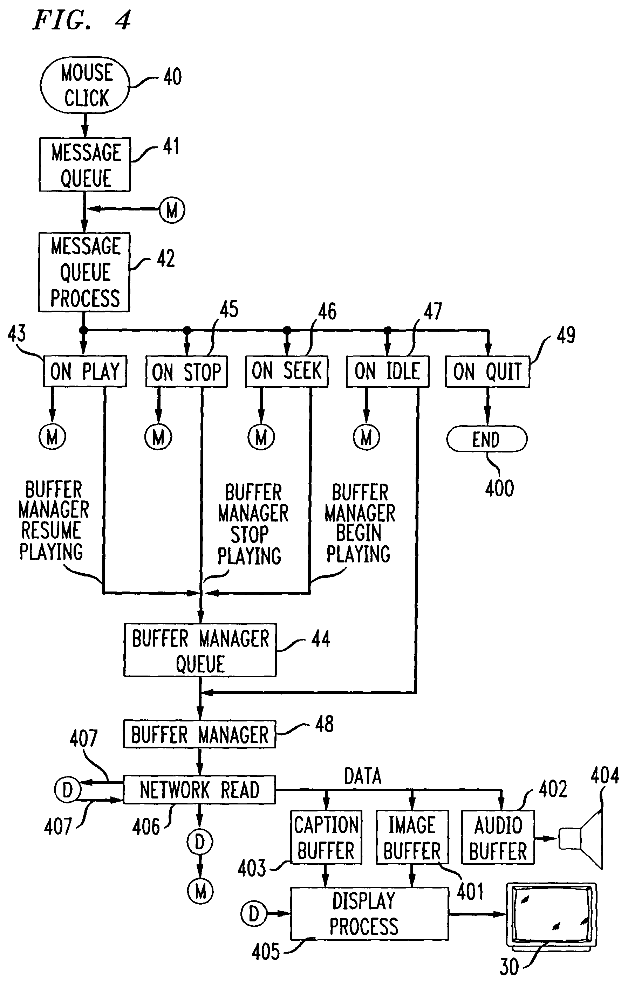

FIG. 4 shows the operational flow of software implementing the viewer embodying the invention. The system accepts mouse clicks or similar inputs at 40. Depending on where on the screen the mouse is clicked, a different message will be sent into message queue 41 which ultimately is processed in message queue processing stage 42. If the message is a play message (at 43), the system sends a "Resume Playing" message to the buffer manager queue 44 and then returns to wait for additional messages. If the message is a stop message (at 45), the system sends a "Stop Playing" message to the buffer manager queue 44 and then returns to wait for additional messages. If the message is a seek message (at 46), the system sends a "Resume Playing" message to the buffer manager queue 44 and then returns to wait for additional messages. If there are no new messages -- i.e., there is an idle condition (at 47), the system continues to monitor for new messages while buffer manager 48 continues to process the messages in buffer manager queue 44. The system continues until a "Quit" message is received (at 49), causing the process to end at 400.

Buffer manager 48 manages the capture of data into image, audio and caption buffers 401, 402, 403, as well as the playback of that data, in response to user requests. If the user requests that a program be played, buffer manager 48 examines the contents of buffer 401 to determine whether or not the desired video material is present there (the audio and closed captioning data preferably are streamed into buffers 402, 403 substantially in real time with only a slight delay). If the content is in buffer 401, the corresponding audio from buffer 402 is played through speaker 404, while the video and closed caption data are played through interface 30 using display process 405. Buffer manager 48 continues to perform network read function 406 to load advance frames. At the same time, the system continues to monitor for user input into message queue 41.

If the video content to be played is not in buffer 401, the audio and closed captioning data continue to be played from buffers 402, 403 while the network read process 406 loads the necessary video frames. As shown by arrows 407, when the system is operating in this mode, buffer manager 48 continually alternates between display process 405 and network read function 406.

The method according to the invention primarily relates to how the system handles network read requests 406 to download video images, so that it correctly handles those images that may be advertising, or some other special category of images. For example, the method could also be applied to the audio or closed captioning portion of the program -- e.g., to provide certain subscribers with audio or closed captioning in a different language for at least certain parts of the program.

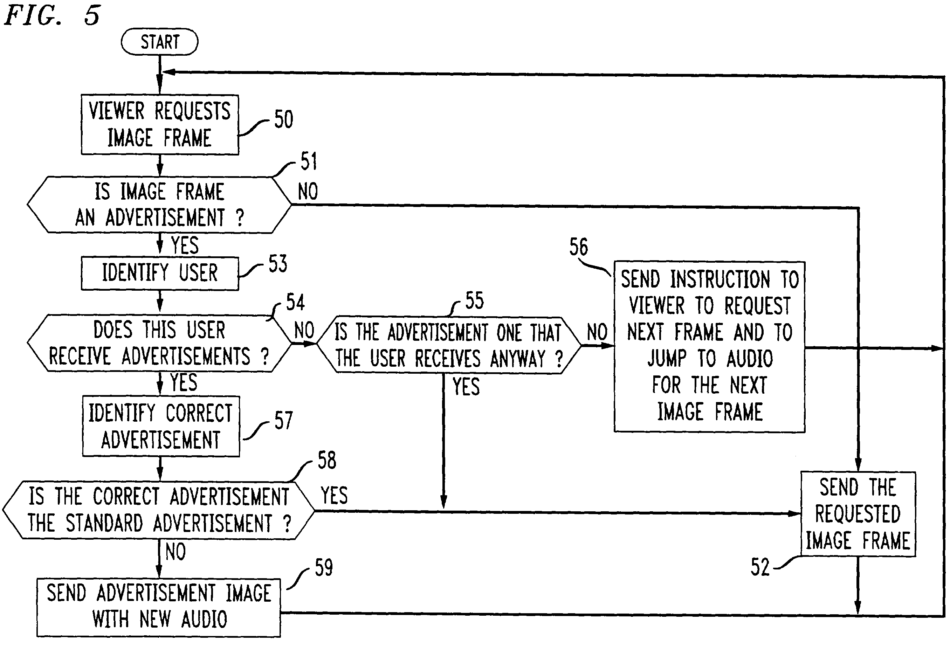

The flow of the method according to the invention is diagrammed in FIG. 5 in the context of advertisements. At step 50, the user's viewer software requests the next image frame indicated in the media table. At test 51, the server determines, preferably by consulting the media table, whether or not the requested image frame is an advertisement. If not, then at step 52 the requested image frame is sent to the user's viewer, and the system loops back to await the next image frame request at step 50.

If, at test 51, the server determines that the requested frame is an advertisement, then at step 53 the server identifies the user, and at test 54 the server tests to determine whether or not this user is one who has contracted not to receive advertisements. If so, then the system proceeds to test 55 where it determines whether or not the current advertisement is one that the user will receive anyway (e.g., because it is a public service message). Again, this information is preferably stored in the media table. If the current advertisement is one that the user will receive anyway, the system sends the requested image frame at step 52 and loops back to step 50 as above. If, at test 55, it is determined that the current advertisement should not be sent to this user, then at step 56, the server sends an instruction to the user's viewer to request the next image frame in its media table, and to advance the audio track to the temporal offset associated with the next image frame (to skip over the advertising audio).

If, at test 54, it is determined that this user does receive advertisements, then at step 57 the correct advertisement is identified. The system then determines at test 58 whether or not the correct advertisement, as identified in step 57, is the default advertisement that was included in the original broadcast. This determination is preferably based on demographic or psychographic information regarding the user. If, at test 58, the correct advertisement is the default advertisement, the system sends the requested image frame at step 52 and loops back to step 50 as above. If, at test 58, the correct advertisement is not the default advertisement, then at step 59, the system preferably sends the image for the correct advertisement, and preferably also sends new audio, to be played in place of the original audio, until the temporal offset of the next frame request. In identifying the correct advertisement, the system will need to know how long the audio portion can play for, and thus part of the attribute information in the media table for the advertisement image, in addition to the fact that it is an advertisement, preferably is the length of the associated audio. This allows the system to select an advertisement whose audio will fit into the time slot allocated for the original advertisement audio. After sending the advertisement at step 59, the system loops back to step 50 as above.

It will be apparent from the above that the same program will be seen differently by different viewers. Some may see the program as originally broadcast with the original advertisements, while others may have many advertisements substituted, depending on their demographic and psychographic profiles. Of course, those who pay not to see advertisements will see the same program without advertisements.

While the invention has been described in the context of programs that are customized by manipulating their advertisements, other features can be customized along with or instead of the advertising. For example, certain subscribers may have a profile that indicates that advertising should be omitted, while other subscribers could have a profile indicating that a certain language be used. The latter subscriber would then receive all of the original images, but would receive audio or closed- captioning in the alternate language, except that for certain segments the original language would be retained if it were indicated in the media table that substitution was not permitted for those segments.

Moreover, although the invention achieves its greatest advantage in the context of a low- bandwidth network as described above, the invention can be used even in a network with high enough bandwidth to transmit full-motion video.

Thus it is seen that a technique whereby a subscriber can view a compressed audiovisual program over a communications network, with some of the advertising automatically customized for the user in place of some original advertising, but other of the original advertising automatically retained as being significant. One skilled in the art will appreciate that the present invention can be practiced by other than the described embodiments, which are presented for purposes of illustration and not of limitation, and the present invention is limited only by the claims which follow.

## Claims

1. A method of customizing transmissions on a communications network, said transmissions being transmissions of audiovisual programs containing segments directed to a general audience, said method comprising the steps of:
storing on said communications network said programs containing said segments;
CHARACTERIZED BY:
storing on said communications network at least one additional segment;
storing on said communications network information regarding subscribers of said communications network;
for each said program, maintaining a table indicating (a) where in said program said segments are found and (b) which of said segments are available for substitution; and
on request by a subscriber for transmission of one said program:
(a) examining information regarding said subscriber and selecting based on said examination at least one of said additional segments,
(b) examining said table associated with said program for determining which of said segments are available for substitution, and
(c) substituting in said program one of said additional segments for one of said segments available for substitution and transmitting said program to said subscriber with said additional segment.

2. The method of claim 1 wherein said additional segment is a null segment.

3. The method of claim 1 wherein all of said segments are available for substitution and said additional segment is a null segment.

4. A method of customizing transmissions on a communications network, said transmissions heing transmissions of audiovisual programs containing segments directed to a general audience, said method comprising the steps of:
storing on said communications network said programs containing said segments;
CHARACTERIZED BY:
storing on said communications network at least one additional segment;
storing on said communications network information regarding subscribers of said communications network;
for each said program, maintaining a table indicating (a) where in said program said segments are found and (b) which of said segments are available for substitution; and
on request by subscribers for transmission of one said program, examining information regarding said subscribers and, for at least one of said subscribers:
(a) selecting based on said examination at least one of said additional segments,
(b) examining said table associated with said program for determining which of said segments are available for substitution, and
(c) substituting in said program one of said additional segments for one of said segments available for substitution and transmitting said program to said one of said subscribers with said additional segment.

5. The method of claim 4 wherein said additional segment is a null segment.

6. The method of claim 4 wherein all of said segments are available for substitution and said additional segment is a null segment.
